# EUROPEAN PATENT APPLICATION

(11) **EP 4 653 694 A1**
(43) Date of publication of application: **26.11.2025**
(21) Application number: 24177571.7
(22) Date of filing: 23.05.2024
(51) Int. Cl.: F03D 3/06

(54) **VERTICAL-AXIS WIND TURBINE, AND ROTOR BLADE AS WELL AS A ROTOR FOR THE VERTICAL-AXIS WIND TURBINE**

(71) Applicant: Köse, Cevdet, 24649 Wiemersdorf (DE)
(72) Inventor: Köse, Cevdet, 24649 Wiemersdorf (DE)
(74) Representative: Lohr, Jöstingmeier & Partner Patent- und Rechtsanwälte mbB

(57) **Abstract**

The present disclosure relates to a rotor blade 21 for a vertical-axis wind turbine with an axis of rotation 3, the rotor blade 21 comprising: a front end and a rear end; at least one curved front profile 30, which has a convex side 40 with an apex that points towards the front end and a concave side 50 which points towards the rear end; at least one rear profile 31, 32, 33, 34 which is arranged rearward and at a distance of the front profile 30; wherein each profile 30, 31, 32, 33, 34 comprises an outer edge 60, 61, 62, 63, 64 and an inner edge 70, 71, 72, 73, 74, characterized in that at least one of the profiles 30, 31, 32, 33, 34 has an extension 110 which is arranged in the vicinity of the outer edge 60, 61, 62, 63, 64 of the profile and/or an extension 110 which is arranged in the vicinity of the inner edge 70, 71, 72, 73, 74 of the profile, wherein each extension 110 extends from the respective edge, in the vicinity of which it is arranged, towards the rear end ±45°, and wherein each extension 110 is distinguishable from the profile 30, 31, 32, 33, 34, in the vicinity of which it is arranged.

## Description

### Field of the invention

The invention relates to a rotor blade for a rotor of a preferably vertical-axis wind turbine and a rotor with at least one, preferably three rotor blades and a wind turbine with the rotor.

### Description of the related art

Wind turbines are devices which convert the kinetic energy contained in the wind, i.e. an air flow, into usable mechanical work. A central element of such wind turbines is a rotor, which converts a part of the kinetic energy of the wind into mechanical work. This mechanical work is usually transmitted via a shaft and can either be used directly, e.g. to pump water, or it can be converted by a generator into electrical energy.

Wind turbines are categorized according to their design and their aerodynamic mode of action. Regarding the design, wind turbines are distinguished, based on the orientation of the axis of rotation of the rotor, either as horizontal-axis wind turbines or as vertical-axis wind turbines. Regarding the aerodynamic mode of action, a distinction is made between pure resistance rotors and lift.

Vertical-axis wind turbines have the advantage that no adjustment of the rotor position is necessary when the wind changes direction. Therefore, the construction effort can be lower as compared to horizontal-axis wind turbines. Known types of vertical-axis wind turbines are the Savonius rotor (resistance rotor) and the Darrieus rotor (lift rotor). A modification of the Darrieus rotor is the so-called H-rotor, which comprises several, usually wing-like, rotor blades that are connected to a central shaft essentially in parallel to the rotor axis via struts, and that drive the central shaft. Originally, the term H-rotor only referred to rotors with two vertically extending rotor blades arranged on opposite sides of the rotor axis. Today, this term is no longer limited to rotors with exactly two rotor blades. Also, the shape of the rotor blades may differ from a vertically extending wing profile.

However, many lift rotor designs have a relatively low efficiency in converting kinetic energy to electrical energy, and often need an auxiliary motor as a starting aid. Moreover, powerful lift rotors tend to vibrate at the blades.

### Summary of the invention

The problem to be solved by the invention is to overcome the above disadvantages of current lift rotor designs. This problem is solved by a rotor blade for a vertical-axis wind turbine according to claim 1, as well as by a rotor with the rotor blade and by a vertical-axis wind turbine with the rotor. Advantageous embodiments of the invention are given in the dependent claims.

The rotor blade according to the present invention is preferably mounted as part of a lift rotor with a predetermined direction of rotation and an axis of rotation. The direction of rotation and the axis of rotation are characteristics of the rotor and of the rotor blade, which inherits these characteristics from the rotor it is a part of. The rotor blade has a front end facing the direction of rotation, and a rear end facing the opposite direction, i.e. with reference to the direction of rotation, the rear end is behind the front end.

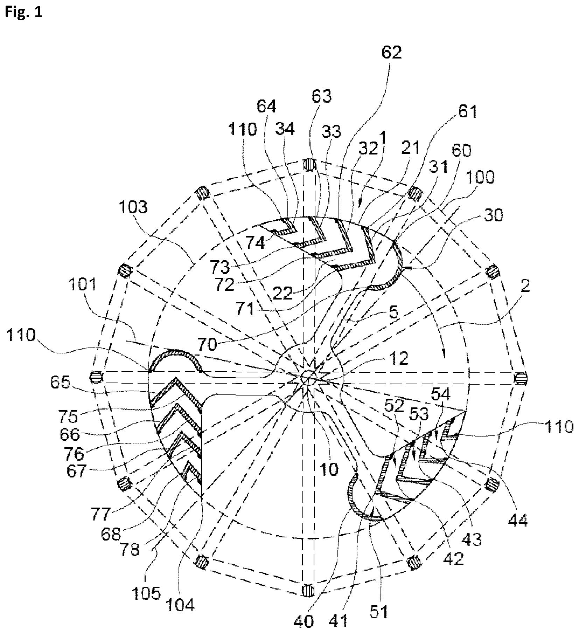

The rotor blade comprises one or more two-dimensional profiles. Here, the term "two-dimensional profile" is used for the shape of the two-dimensional cross-section of a three-dimensional body in the direction of the wind flow, i.e. the cross-section lies in a plane that is substantially orthogonal to the axis of rotation. For example, Fig. 1 shows a cross-section of a rotor with three rotor blades 21, each cross-section of a rotor blade 21 having a two-dimensional profile 31 with an outer leg 65 and an inner leg 75.

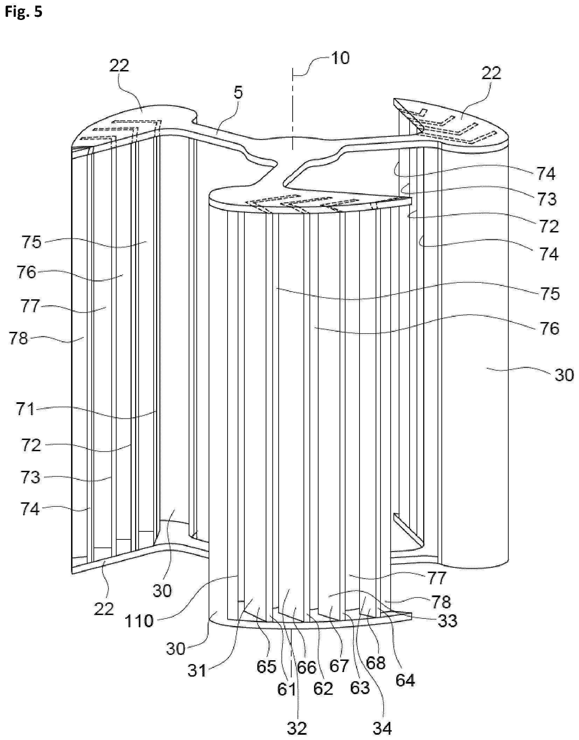

Fig. 5 shows a perspective view of an example of a three-dimensional rotor, which has a cross-section similar to the cross-section shown in Fig. 1. Fig. 5 shows that in the three-dimensional rotor, the legs 65 and 75 of two-dimensional profile 31 may extend in a direction of the axis of rotation 10, thereby forming a "three-dimensional profile". In the rotor shown in Fig. 5, any two cross-sections, which are located between the upper and the lower carrier 22 and which are essentially orthogonal to the axis of rotation 10, are essentially identical. Hence, in the rotor shown in Fig. 5, there is a bijective mapping between the characteristics of the two-dimensional profile 31 and the corresponding three-dimensional profile consisting of the two-dimensional profile 31 extended along the axis of rotation 10. Therefore, in most instances in the present description, the term "two-dimensional" in "two-dimensional profile" and the term "three-dimensional" in "three-dimensional profile" are omitted and only the term "profile" is used in both cases, if this does not lead to ambiguities.

In the following, the one or more profiles of the rotor blade are described in terms of their specific properties. A profile can for example have the property to be a curved profile (such as profile 30 in Fig. 1) or an angle profile (such as profile 31 in Fig. 1). Unless specified otherwise, the described properties of the one or more profiles apply to each cross-section of the rotor blade regardless of its position along the axis of rotation, as in the example shown in Fig. 5.

However, the shape of the rotor blade and its components may differ from a vertically extending wing profile. For example, the three-dimensional profiles may form a helix around the axis of rotation. Thereby, the pitch of the helix may be constant or variable. The helix may be cylindrical or not. Additionally or alternatively, for two given two-dimensional cross-sections substantially orthogonal to the axis of rotation, the distance between the rotor blade and the axis of rotation, defined as the minimum radius a circle around the axis of rotation can have while still touching the rotor blade, may not be the same for the two cross-sections. Moreover, additionally or alternatively, the absolute size of the two-dimensional profiles and/or the relative sizes of the two-dimensional profiles in a common cross-section substantially orthogonal to the axis of rotation, may vary along the axis of rotation.

The person skilled in the art will readily understand that some specific properties of the one or more profiles of the rotor blade can be described simpler and clearer when referring to the two-dimensional profile, whereas some other specific properties of the one or more profiles can be described simpler and clearer when referring to the three-dimensional profile. Thereby, it is clear to the person skilled in the art that edges, planes, and circular cylinders of a three-dimensional profile correspond to respective points, lines, and circles of the corresponding two-dimensional profile. In order to avoid complicated sentences and to improve readability of the description, the terms edges, planes, and circular cylinders of a three-dimensional profile are sometimes used for points, lines, and circles of a corresponding two-dimensional profile, respectively, and vice versa.

The rotor blade has at least one curved front profile, the convex side of which having an apex that points towards the front end. The curved front profile can, for example, be a ring segment, in particular a circular ring segment, whereby the ring axis is preferably parallel to the axis of rotation of the rotor and thus also of the rotor blade. In relation to the direction of rotation, at least one further profile is arranged behind the curved front profile, i.e. the at least one further profile is located closer to the rear end of the rotor blade than the curved front profile. This further profile can also be a curved profile. In the following, all profiles which are located behind the curved front profile are referred to as rear profiles.

Each profile, including the front profile and the rear profiles, comprises an inner edge and an outer edge. On the level of a corresponding two-dimensional profile, the inner edge corresponds to the point of the profile which is located closest to the axis of rotation. If there is a plurality of points which are equally close to the axis of rotation and closer to the axis of rotation than all other points of the profile, then the point out of the plurality of points which is rearmost with respect to the direction of rotation, defines the inner edge of the profile. Correspondingly, the outer edge of a profile is defined as usual on the level of the corresponding two-dimensional profile as the point of the respective profile which is located furthest away from the axis of rotation. If there is a plurality of points which are equally far from the axis of rotation and further away from the axis of rotation than all other points, then the point out of the plurality of points which is rearmost in the direction of rotation, defines the outer edge of the profile.

Preferably, at least two outer edges of the profiles, particularly preferably at least all outer edges of the rear profiles, and very particularly preferably all outer edges of the profiles have a common cylindrical envelope. The axis of rotation is preferably also the axis of symmetry of the envelope, i.e. the cylinder axis.

Preferably, at least two inner edges of the profiles, particularly preferably at least all inner edges of the rear profiles, and very particularly preferably all inner edges of the profiles lie in a common plane, which forms a common planar envelope.

It is particularly preferred that at least one of the profiles (30, 31, 32, 33, 34) has a first extension, wherein the first extension is arranged in the vicinity of the outer edge of the profile, and/or a second extension, wherein the second extension is arranged in the vicinity of the inner edge of the profile. The first extension and the second extension do not necessarily have any differences beside the fact, that they are arranged in the vicinity of different edges. Therefore, the terms "first" and "second" are omitted in the following and all extensions are simply referred to as extension. If the term "extension" is used, it may be replaced by "first extension" and/or "second extension", unless already specified.

The extension being arranged "in the vicinity of the outer or inner edge" of the profile means that the minimum distance between a point of the extension and the outer or inner edge of the profile, respectively, is smaller than the maximum distance between any two points of the extension. Preferably, the minimum distance between a point of the extension and the outer or inner edge of the profile, respectively, is smaller than the minimum distance between a point of the extension and any point of any profile which is different from that edge of that profile.

Each extension may extend from the respective edge, in the vicinity of which it is arranged, towards the rear end of the rotor blade. Thereby, the extension may deviate from the direction of a two-dimensional vector, which maps the respective edge to the rear end of the rotor blade, by a maximum angle of ±45°, ±40°, ±35°, ±30°, ±25°, ±20°, ±15°, ±10°, or ±5°. In some embodiments, the extensions, which are arranged in the vicinity of an outer edge, preferably extend along a common envelope of the outer edges of the profiles. Moreover, the extensions, which are arranged in the vicinity of an inner edge, preferably extend along a common envelope of the inner edges of the profiles. In some embodiments, at least one extension, which is not arranged in the vicinity of the rearmost profile, preferably extends along a straight line between the inner or outer edge of the profile, in the vicinity of which it is arranged, and the inner or outer edge, respectively, of the profile which is arranged directly behind that profile.

Regarding the three-dimensional case, each extension preferably extends at least along a part of the edge of the three-dimensional profile, in the vicinity of which the extension is arranged. Particularly preferably, the extension extends along a major part of the edge, and very particularly preferably, the extension extends along the whole edge.

Each extension is distinguishable from the profile, in the vicinity of which it is arranged. In some embodiments, the extension is distinguishable from said profile in that in a cross-section, which is essentially parallel to the axis of rotation, the transition from the two-dimensional profile to the extension is not continuous and/or not differentiable. In some embodiments, the extension is distinguishable from said profile in that the profile and the extension are made of different materials and/or the three-dimensional profile and the extension have different surface characteristics. In some embodiments, the extension is distinguishable from said profile in that the profile and the extension are supported by different supporting structures and/or the profile does not form the primary supporting structure of the extension and vice versa.

Only to avoid misunderstandings, an extension may itself be yet another profile, which may be substantially planar, or curved or angled, or a combination of all three. Herein, we use the term "*extension*" only to verbally distinguish the front profiles and rear profiles from their respective (optional) "*yet another profile*" (i.e. the optional extensions), which may extend from the respective edges, in the vicinity of which these may be arranged, towards the rear end of the rotor blade.

As such an optional extension may form a larger, composite profile in combination with the profile in the vicinity of which it is arranged. Moreover, it may be attached to the profile in the vicinity of which it is arranged. Additionally or alternatively, it may be attached to a carrier as explained below in more detail. Further, it may only be attached at a limited number of attachment points. It may be mounted movably, for example by a hinge at the points of attachment, or due to its own elasticity.

Preferably, an extension may comprise a metal material, such as aluminium and/or stainless steel and/or titanium; and/or a natural product material, such as a plant-based material like wood and/or cotton, and/or an animal-based material such as bone and/or feathers; and/or a synthetic material such as a glass fiber material; and/or a carbon fiber material.

The extensions have the advantage of reducing or eliminating vibrations at the rotor blades.

Preferably, when at least all outer edges of the rear profiles have a common cylindrical envelope, the axis of which may coincide with the axis of rotation, and when at least all inner edges of the rear profiles lie in a common plane, the rotor blade has a rear edge, defined as the rearmost of the two intersection edges of the common cylindrical envelope and the common plane, and a front edge, defined as the intersection edge of the common cylindrical envelope and the radial, which is tangent to the convex side of the front profile.

Preferably, the (arc) length of the section of the cylindrical envelope from the rear edge to the front edge of the rotor blade corresponds to at least approximately 1/6 (within ±20%, ±15%, ±10%, or ±5%) of the circumference of the envelope. For a rotor having for example three rotor blades, this results in a good air flow through the rotor and an optimized air flow to the rotor blades passing through the leeward side of the rotor.

The maximum thickness of the rotor blade preferably corresponds to the distance between the inner edge and the outer edge of the curved profile. This distance is preferably at least about 1/3 (within ±20%, ±15%, ±10%, or ±5%) of the distance between the foremost edge of the curved front profile and the axis of rotation.

Preferably, the profile arranged right behind the curved front profile is an angle profile, referred to as the first angle profile. The first angle profile has a first inner leg and a first outer leg. The first inner leg and the first outer leg converge in a first leading edge, which points in the direction of the front profile, i.e. in the direction of rotation. This first leading edge is preferably arranged parallel to the axis of rotation. A second angle profile can be arranged behind the first angle profile, which correspondingly has a second inner leg and a second outer leg, which constitute a second leading edge. The second leading edge points in the direction of the first angle profile and therefore also in the direction of rotation. Such a rotor blade allows for an early, automatic start-up of a corresponding rotor and also for an unusually high degree of efficiency.

Preferably, the two inner legs and/or the two outer legs are parallel, i.e. the first inner leg is preferably parallel to the second inner leg and/or the first outer leg is preferably parallel to the second outer leg. This increases the efficiency.

Preferably, the front profile has a ring axis which lies in a first plane which is arranged parallel to a second plane which is defined by the first leading edge and the second leading edge. The second plane is preferably offset inwards, i.e. in the direction of the axis of rotation, parallel to the first plane. This not only enables simple, precise assembly of the rotor blade, but also good efficiency of the corresponding rotor.

Preferably, the rotor blade has a third angle profile with a third inner leg and a third outer leg. The two third legs constitute a third leading edge.

Preferably, the rotor blade has a fourth angle profile with a fourth inner leg and a fourth outer leg, which constitute a fourth leading edge.

The inner and/or outer legs of the third and the fourth angle profiles are preferably parallel to each other, respectively.

The inner and outer legs of the second and third angle profiles, on the other hand, are preferably slightly tilted relative to each other, so that the channel formed by the two outer legs of the second and third angle profiles widens in the direction towards the rotor axis.

The third leading edge and the fourth leading edge lie in a common third plane for further optimization of the degree of effectiveness. This third plane can intersect the above-mentioned second plane in a straight line, which is preferably substantially parallel to the axis of rotation. The angle at which the two planes intersect is preferably less than 30°, particularly preferably less than 20°. The third plane is particularly preferably offset inwards parallel to the second plane.

In some embodiments, at least one of the rear profiles is a curved profile. Preferably, each curved profile comprises an area which has a convex side that points towards the front end.

Above, it was assumed that the inner legs and the inner edges are arranged on the side of the rotor blade facing the axis of rotation and that the outer legs and the outer edges are correspondingly arranged on the side of the rotor blade facing away from the axis of rotation.

The inner legs and/or the outer legs or the angle profiles are preferably not curved or only slightly curved. The same applies to the inner and/or outer edges, which are also preferably arranged parallel to the axis of rotation.

As set forth above, the shape and the arrangement of the profiles of the rotor blade allows for an early, automatic start-up of a corresponding rotor and an unusually high degree of efficiency of a corresponding rotor. Moreover, the extensions allow for reducing or eliminating vibrations at the rotor blades. In addition, the shape and the arrangement of the profiles on the one hand, and the extensions on the other hand, have a synergetic effect. Specifically, since the extensions reduce or eliminate vibrations and thereby improve the stability of the corresponding rotor at high rotation speeds, the potential of the rotor blade and its profiles can be exploited even further, because the extensions allow for running the corresponding rotor securely at higher rotation speeds than without the extensions. Hence, the profiles and the extensions have the synergetic effect of further improving the efficiency of the corresponding rotor.

The profiles of the rotor blade may be fastened to the carriers and/or support arms of the rotor via a carrier assembly. The carrier assembly may comprise a carrier profile, which can be fastened to a carrier and/or a support arm, for example by screws, rivets, and/or other fastening means. When the term "screw" is used in the following, it can mean screw, rivet, and/or any other fastening means. Moreover, the carrier assembly may comprise at least one connection profile, which can be fastened to a profile of the rotor blade, for example by screws. The carrier profile and the at least one connection profile can be attached to each other, for example by screws. Thereby, the profiles of the rotor blade are fastened to the carriers and/or support arms of the rotor via the carrier assembly.

The carrier profile of the carrier assembly may have an (at least essentially) U-shaped cross-section with an elongated, flat middle leg in between two elongated, flat side legs, wherein the side legs extent from the longitudinal edges of the middle leg in a direction which is (at least essentially) orthogonal to the plane which comprises the middle leg. The side legs of the carrier profile may comprise means for fastening the carrier assembly to a carrier and/or a support arm, such as holes for screws.

Preferably, parts of the at least one connection profile may have a shape which is complementary, congruent, and/or corresponds to the shape of parts of the respective profile to which it is connected, and other parts of the at least one connection profile may have a shape which is complementary, congruent, and/or corresponds to the shape of parts of the carrier profile to which it is connected. This allows for a robust connection between the profiles.

The position of the carrier profile relative to the carrier and/or a support arm, as well as the position of individual profiles relative to the carrier profile may be adjustable. For example, it might be possible to move the carrier profile back and forth relatively to the carrier and/or support arm along the longitudinal direction of the carrier profile, and/or it might be possible to move one or more individual profiles back and forth relatively to the carrier profile along the longitudinal direction of the carrier profile. Thereby, the position of the carrier profile relative to the carrier and/or support arm might be adjusted by screwing the carrier profile off, moving the carrier profile, and screwing the carrier profile on again. Additionally or alternatively, the position of the carrier profile may be adjusted via a guide rail between the carrier profile and the carrier and/or support arm, wherein the guide rail can be locked in different positions. Positions of the connection profiles relative to the carrier profile may be adjusted in similar ways.

Additionally or alternatively, at least one connection profile may be permanently fastened to the carrier profile. For example, the at least one connection profile may and the carrier profile may be embodied integrally with one another and/or may be bonded to one another.

Additionally or alternatively, the carrier profile may be divided into at least two pieces, such that at least two different groups of profiles each have an individual carrier profile which is not directly connected to the carrier profile of the other group.

### Description of Drawings

In the following the invention will be described by way of example, without limitation of the general inventive concept, on examples of embodiment with reference to the drawings.
**Fig. 1** shows a horizontal section through a wind turbine.
**Fig. 2** shows a horizontal section through a rotor blade.
**Fig. 3** shows a horizontal section through a further rotor blade.
**Fig. 4** shows a horizontal section through a further rotor blade.
**Fig. 5** shows a side view of a rotor.
**Fig. 6A** shows a carrier assembly.
**Fig. 6B** shows the carrier assembly of Fig. 6A from a different angle.
**Fig. 7A** shows carrier assembly connected to a rotor blade.
**Fig. 7B** shows a carrier assembly connected to a rotor blade.
**Fig. 8A** shows a cross-section of a carrier assembly.
**Fig. 8B** shows a cross-section of a carrier assembly.
**Fig. 9** shows an arrangement of carrier assemblies and support arms.

Fig. 1 shows a schematized horizontal section through a rotor 1 according to the invention, which is shown with solid lines. The dashed lines show a possible scaffold 100 for supporting the rotor 1.

In the example shown, the rotor 1 has three rotor blades 21, which are attached to a shaft 12 by means of support arms 5. The shaft 12 and thus the entire rotor 1 can be rotated about a vertical axis of rotation 10. Of course, other numbers of rotor blades 21 are also possible.

Each rotor blade 21 has at least one carrier 22, which is designed here as a plate and is shown in the top view. A curved front profile 30 extending parallel to the axis 10 is attached to the support 22. The curved front profile 30 has a convex surface 40 and two edges 60, 70, wherein one of the two edges is closer to the shaft 12 than the other edge, the closer edge being referred to as inner edge 70 of the curved front profile 30 and the other edge being referred to as outer edge 60 of the curved front profile.

Four vertically extending rear profiles 31, 32, 33 and 34 are arranged one behind the other in the direction of rotation 2 behind the curved front profile 30. Preferably, the four rear profiles 31, 32, 33, and 34 are angled and therefore are referred to as angle profiles 31, 32, 33, and 34 in the following. The four angle profiles are numbered 31, 32, 33 and 34 merely to distinguish them, i.e. the angle profile 31 is labelled as the first angle profile 31 and the angle profile 34 as the fourth angle profile 34.

The convex side 40 of the curved front profile 30, like the respective leading edges 41 to 44 of the corresponding angle profiles 31 to 34, points in the direction of rotation 10 of the rotor 1 indicated by the arrow 2. Between the curved profile 30 and the subsequent angle profile 31 there is a free space 51 through which wind can enter on the outer side of the rotor 1 and exit on the inner side, i.e. the side facing the axis 10. The free space 51 therefore forms a channel 51. Corresponding free spaces or channels 52 to 54 are also formed by the angle profiles 31 to 34.

In a two-dimensional cross-section essentially orthogonal to the axis of rotation 10, each of the angle profiles 31 to 34 has an inner leg 75 to 78 and an outer leg 65 to 68, wherein the inner leg 75 to 78 is closer to the axis of rotation 10 than the outer leg. Each inner leg 75 to 78 has a first, inner edge 71 to 74, which is the point of the inner leg 75 to 78 that is closest to the axis of rotation 10, and a second edge. Each outer leg 65 to 68 has a first, outer edge 61 to 64, which is the point of the outer leg 65 to 68 that is furthest away from the axis of rotation 10, and a second edge. The second edge of each inner leg 75 to 78 and the second edge of the corresponding outer leg 65 to 68 is identical, i.e. the respective inner leg 75 to 78 and the corresponding outer leg 65 to 68 have a common edge. Each inner leg 75 to 78 and corresponding outer leg 65 to 68 extend backwards with respect to the direction of rotation 2 and therefore, the respective common edge is referred to as leading edge 41 to 44.

At least in the horizontal section shown in Fig. 1, each inner edge 71 to 74 and outer edge 61 to 64 has a corresponding extension 110, which is located in the vicinity of the respective edge and extends, from a point of the extension 110 which is closest to the respective edge, substantially backwards with respect to the direction of rotation 2. Here, substantially backwards means in a direction which deviates from the backward direction by equal to or less than 45°, 40°,35°, 30°, 25°, 20°, 15°, 10°, or 5°.

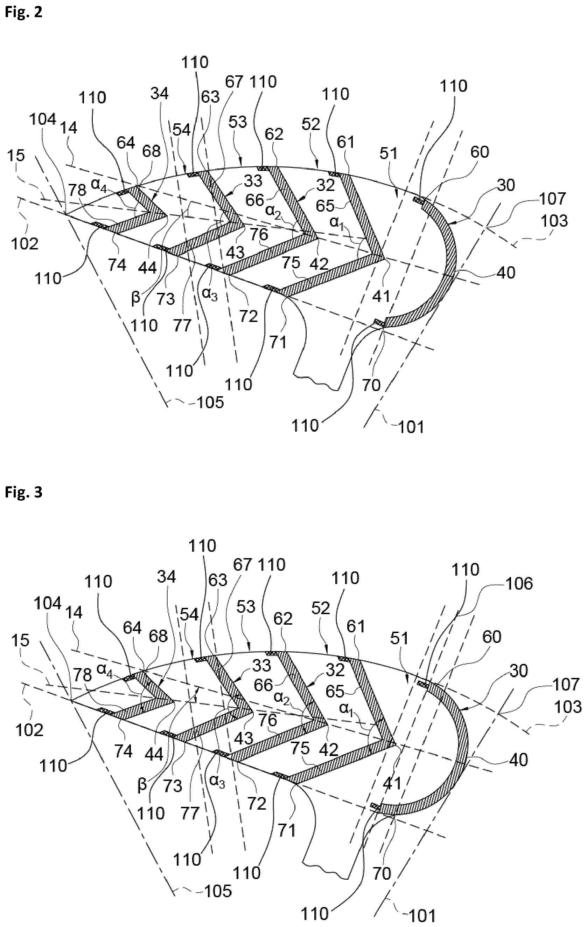

The components with reference numerals 101 and 103 to 105 are explained in the following with reference to Figures 1 and 2.

Fig. 2 shows a rotor blade 21 of the rotor 1 in Fig. 1 at a scale at which the arrangement of the angle profiles 31 to 34, the curved profile 30, and the extensions 110 can be better identified.

At least in the horizontal section shown, the inner legs 75 to 78 and the outer legs 65 to 68 are at least approximately straight. Each inner leg 75 to 78 and its corresponding outer leg 65 to 68 span an angle α₁ to α₄ at the corresponding leading edge 41 to 44. The angles α₁ to α₄ are preferably at least approximately the same size (e.g. 90° with a maximum deviation of ±10° or ±5°). Moreover, the inner legs 75, 76 of the angle profiles 31, 32 are preferably at least approximately parallel to each other (with a maximum deviation of ±10° or ±5°). The same applies to the outer legs 65, 66 of the two angle profiles 31, 32. Likewise, the inner and outer legs 67, 68, 77, 78 of the angle profiles 33, 34 are preferably at least approximately parallel to each other (with a maximum deviation of ±10° or ±5°).

The outer edges 61 to 64 preferably have a common cylindrical envelope 103, the cylindrical axis of which coincides with the axis of rotation 10. The inner edges 71 to 74 preferably lie in a common plane 102. The rotor blade 21 has a rear edge 104, which is defined as the rearmost of the two intersection edges of the common cylindrical envelope and the common plane 102. Moreover, the rotor blade 21 also has a front edge 107, which is defined as the intersection edge of the common cylindrical envelope 103 and the radial 101, which is tangent to the convex side 40 of the front profile 30.

The section of the cylindrical envelope 103 between the rear edge 104 and the front edge 107 corresponds to one sixth (1/6) of the circumference of the envelope 103 in the example shown. Accordingly, the angle formed by the radial 101 and the radial 105, which is tangent to the rear edge 104, is π/3. Of course, other values are also possible, which can deviate by around ±20%, ±15°, ±10°, or ±5°for example. In the given example, the cover of the leeward-side rotor blades 21 by the windward-side rotor blade or blades 21 is minimized. Therefore, all rotor blades 21 can contribute to the energy conversion over a wide range of angles.

Preferably, the leading edges 41 and 42 of the first and second angled profiles 31 and 32 together with the apex of the curved front profile 30 lie at least approximately in a common plane 14. This plane is preferably parallel to the plane 102, which is defined by the inner edges 71 to 74.

Equally preferably, the leading edges 43 and 44 of the angled profiles 33 and 34 lie in a further plane 15, which forms an angle β with the plane 14. The angle β is preferably between about 3° and about 30° (alternatively 0° to 50°).

It is particularly preferred that at least one of the profiles 30 to 34 has a first extension 110, wherein the first extension 110 is arranged in the vicinity of the outer edge 60 to 64 of the profile 30 to 34, and/or a second extension 110, wherein the second extension is arranged in the vicinity of the inner edge 70 to 74 of the profile 30 to 34. The first extension 110 and the second extension 110 not necessarily have any differences beside the fact, that they are arranged in the vicinity of different edges. Therefore, the terms "first" and "second" are omitted in the following and all extensions are simply referred to as extension 110.

At least in the horizontal section shown, preferably all profiles 30 to 34 have an extension 110 which is arranged in the vicinity of the outer edge 60 to 64 and an extension 110 which is arranged in the vicinity of the inner edge 70 to 74 of the profile 30 to 34, respectively.

As set forth above, the extension is arranged in the vicinity of an edge 60 to 64 and 70 to 74, if its distance to the respective edge is small compared to its size. Specifically, that means that in a two-dimensional cross-section, which is substantially parallel to the axis of rotation 10, the minimum distance between a point of the extension and the respective edge is smaller than the maximum distance between any two points of the extension. Preferably, the extension being arranged in the vicinity of an edge also means that the extension is closer to that edge than to any other edge 60 to 64 and 70 to 74, specifically if the minimum distance between a point of the extension 110 and the respective edge is smaller than the minimum distance between any point of the extension 110 and any point of any profile 60 to 64 and 70 to 74, which is different from that edge.

Each extension 110 extends from the respective edge 60 to 64 and 70 to 74, in the vicinity of which it is arranged, towards the rear end 104 of the rotor blade 21 with a maximum deviation of 45°. In the example shown in Fig. 2, the extensions 110 in the vicinity of the outer edges 61 to 64 extend along the common cylindrical envelope 103 of the outer edges 61 to 64, and the extensions 110 in the vicinity of the inner edges 71 to 74 extend along the common planar envelope 102 of the inner edges 71 to 74.

Each extension is 110 distinguishable from the profile 30 to 34 having the edge 60 to 64 and 70 to 74, in the vicinity of which that extension 110 is arranged. For example, as shown in Fig. 2, the extension 110 in the vicinity of outer edge 61 is distinguishable from profile 31 in that the transition from profile 31 to that extension 110 is not differentiable.

In other examples, the extension 110 may be distinguishable from the profile 30 to 34 having the edge 60 to 64 and 70 to 74, in the vicinity of which that extension 110 is arranged, in that the transition from the profile to the extension is not continuous, and/or in that the profile and the extension are made of different materials, and/or in that the profile and the extension have different surface characteristics, and/or in that the profile and the extension are supported by different supporting structures, and/or in that the profile does not form the primary supporting structure of the extension and vice versa. This list of examples is not exhaustive. Indeed, any technical feature of an extension 110 which a person skilled in the art can utilize for differentiating between the extension 110 and the profile 30 to 34 having the edge 60 to 64 and 70 to 74, in the vicinity of which that extension 110 is arranged, makes the extension 110 distinguishable from the respective profile 30 to 34 in the sense of the present invention.

Each of the above described differentiating features have the effect that the flow of the wind through the rotor blade 21 is changed as compared to a rotor blade 21 without extensions 110.

The rotor blade 21 has extremely good starting behaviour because it acts like a resistance rotor in the lower rotation speed range. At higher rotation speeds or wind speeds, a vacuum is created in the area in front of the convex front side 40, similar to a classic aerofoil, i.e. the rotor blade 21 also functions as a lift rotor. Depending on the angular position of the rotor blade 21 in relation to the wind, the wind can also flow through the channels 51 to 54, whereby the air escaping on the inside of the ducts 51 to 54 accelerates the rotor blade 21 in the direction of rotation. When the rotor blade 21 is in the leeward position, the wind can flow in the opposite direction through the channels 51 to 54 and leave the rotor 1 with low resistance.

Moreover, the rotor blade 21 runs smoothly even at high rotation speeds, since the extensions 110 influence the wind flow, thereby reducing or eliminating vibrations at the rotor blade 21.

Fig. 3 shows a variant of the rotor blade 21, which differs from the rotor blade 21 in Fig. 2 only in that the cross-sectional area of the curved front profile 30 is that of a half circular ring, with the inner edges 60 and the outer edges 70 of the curved front profile 30 lying against a common radial 106. Incidentally, the description of Fig. 2 also applies to Fig. 3.

In the variant shown in Fig. 3, the outer edge 60 and the inner edge 70 of the curved front profile lie in the cylindrical envelope 103 of the outer edges 61 to 64 and in the planar envelope 102 of the inner edges 71 to 74, respectively. Preferably, the planar envelope 102 forms at least approximately (within ±10° or ±5°) a right angle with the radial 106.

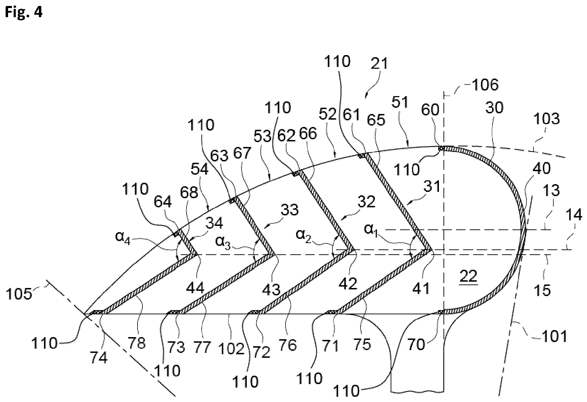

In both Fig. 2 and Fig. 3, the space enclosed by the envelopes 102, 103 and the convex front side 40 has the form of an aerofoil, which can also be clearly recognized in Fig. 4 and Fig. 5.

The rotor blade 21 in Fig. 4 has approximately the same elements as the rotor blades in Figs. 1 to 3, so the above paragraphs also apply to Fig. 4. However, these elements are arranged slightly differently in relation to each other: Like the rotor blades in Fig. 1 to Fig. 3, the rotor blade 21 has a curved front profile 30 behind which four angled profiles 31 to 34 are arranged. The curved front profile 30 has the shape of a circular ring segment with an opening angle of approximately 180° (within ±25°, ±20°, ±15°, ±10°, or ±5°). In the example shown, the axis of the circular ring segment lies, together with the inner edge 60 and the outer edge 70 of the curved front profile 30, in the radial plane 106 in relation to the axis of rotation 10. A first plane 13 bisects the curved front profile 30 into an inner and an outer half and is therefore orthogonal to the radial plane 106.

The first two angle profiles 31 and 32 have inner legs 65, 66 and outer legs 75, 76 arranged in parallel to one another with leading edges 41, 42, which lie in a common second plane 14. The second plane 14 is arranged orthogonally to the radial plane 106 and inwardly offset in parallel to the first plane 13. The same applies to the leading edges 43, 44 of the third and fourth angle profiles 33, 34, which lie in a common third plane 15, which is inwardly offset in parallel to the second plane 14.

The inner legs 77, 78 of the third and fourth angle profiles 33, 34 are parallel to each other in the same way as the outer legs 67, 68 of the third and fourth angled profiles 33, 34. This does not apply to the inner legs 76, 77 and outer legs 66, 67 of the second and third angle profiles 32, 33. The channel 53 formed between these two angle profiles has a cross-sectional area that widens from the outer side of the rotor blade 21 to the second plane 14 and from the third plane 15 to the inner side of the rotor blade 21. The descriptions of Fig. 1 to Fig. 3 apply accordingly to the envelopes 102, 103.

Fig. 5 shows a perspective side view of the rotor 1 in Fig. 1, whereby the scaffold 100 has been omitted for better visualization of the rotor 1. Moreover, only one extension 110 is exemplarily shown in Fig. 5, additional extensions 110 have been omitted for better visualization of the profiles. The description of Fig. 1 and Fig. 2 should be read accordingly to Fig. 5. Of course, the rotor blades 21 shown in Fig. 2 can also be replaced by those described in Fig. 3 or Fig. 4. The view changes only minimally as a result.

The rotor blades 21 are rigidly attached to the support arms 5; there is no provision for adjusting the angle of attack. The profiles 30 and the angle profiles 31 to 34 are also rigidly attached to the respective carrier 22, i.e. they are not adjusted.

The extensions 110 are also rigidly attached to the respective carrier 22. Alternatively, one or more of the extensions 110 can be provided in a way which allows for adjusting their position and/or orientation relative to the respective carrier 22.

The inner and outer legs 61 to 64, 71 to 74 of the angle profiles 31 to 34 preferably have at least approximately flat surfaces.

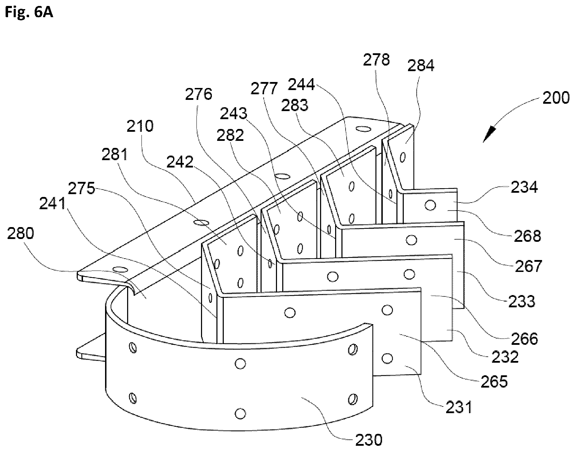

There are several alternative and/or combinable methods of attaching the profiles of a rotor blade 21 to the carriers 22 and support arms 5 of the rotor 1. Fig. 6A is a perspective view of a preferred embodiment of a carrier assembly 200, which can be used to connect the profiles 30 to 34 to a carrier 22 and/or a support arm 5. The carrier assembly 200 may comprise a carrier profile 210. As shown in Fig. 6A, the carrier profile 210 of the carrier assembly 200 may have an (at least essentially) U-shaped cross-section with an elongated, flat middle leg in between two elongated, flat side legs, wherein the side legs may extend from the longitudinal edges of the middle leg in a direction which is (at least essentially) orthogonal to the plane which comprises the middle leg. The side parts of the carrier profile 210 of the carrier assembly 200 may comprise means for fastening the carrier assembly 200 to a carrier 22 and/or a support arm 5. As shown in Fig. 6A, the side legs of the carrier profile 210 may have holes, through which screws can be passed for fastening the carrier profile 210 to a carrier 22 and/or a support arm 5.

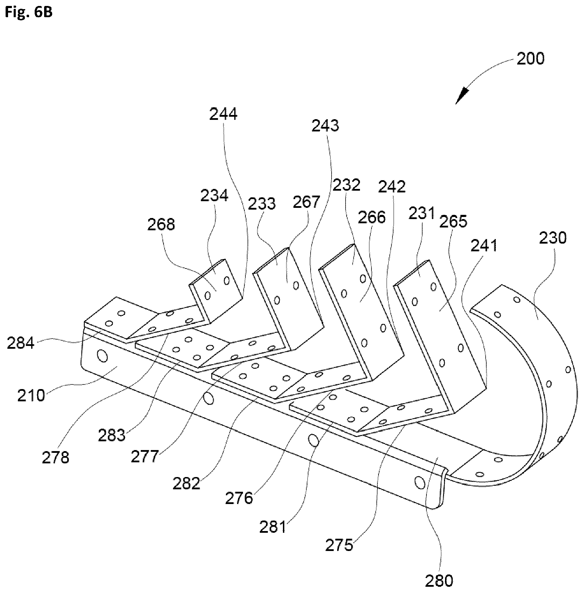

In addition to the carrier profile 210 of the carrier assembly 200, the carrier assembly 200 may comprise connection profiles 230 to 234. Connection profiles 230 to 234 may have connection legs 280 to 284, respectively. Via these connection legs 280 to 284, connection profiles 230 to 234 can be fastened to the middle leg of the carrier profile 210, for example by screws which may be passed through holes in the connection legs 280 to 284 of the connection profiles 230 to 234 and through respective holes in the middle leg of the carrier profile 210. Figures 6A and 6B show perspective views of the carrier assembly 200. A carrier profile 210 and connection profiles 230 to 234 may be attached to the carrier profile 210.

Optionally, the middle leg of the carrier profile 210 may be longer than the side legs of the carrier profile 210, i.e. the middle leg may extend in a longitudinal direction beyond the side legs. In this case, the section of the middle leg, which extends beyond the side legs, can be formed as a connection profile. For example, front-most connection profile 230 can be formed in this way as a part of the carrier profile 210. Alternatively or additionally, the rear-most connection profile 234 can be formed in this way as a part of the carrier profile 210. Connection profiles, which are formed as parts of the carrier profile 210, do not necessarily have a connection leg.

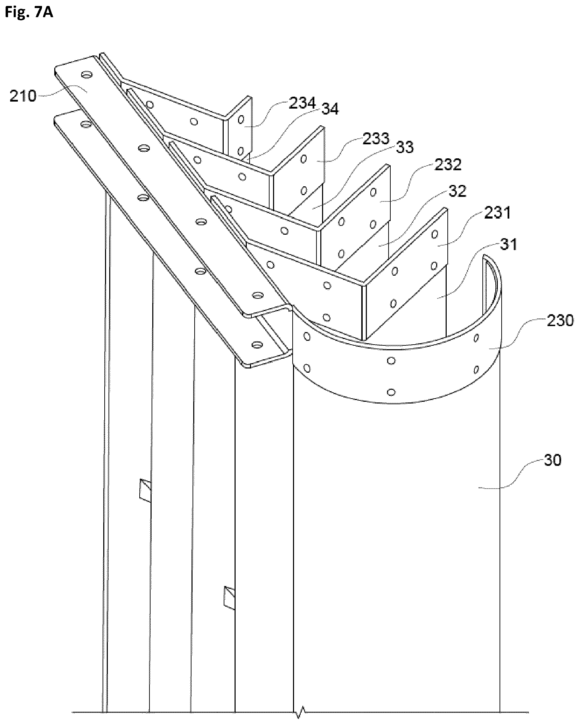

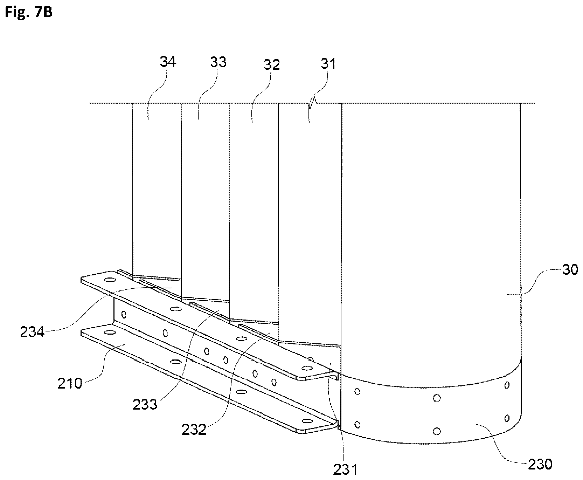

As shown in Figures 7A and 7B, the connection profiles 230 to 234 of the carrier assembly 200 can be attached to the profiles 30 to 34 of the rotor blade 21. Preferably, at least parts of the cross-sections of the connection profiles 230 to 234 are similar to at least parts of the cross-sections of the respective profiles 30 to 34. As shown in Fig. 6A and 6B, the connection profiles 231 to 234 may have inner legs 275 to 278, outer legs 265 to 268, and leading edges 241 to 244, which correspond to and are configured to envelope the inner legs 75 to 78, the outer legs 65 to 68, and the leading edges 41 to 44 of the angle profiles 31 to 34. The connection legs 281 to 284 of the connection profiles 231 to 234 may extend from the inner legs 275 to 278, as shown in Fig. 6B. Specifically, the connection profiles 231 to 234 may be shaped such that the inner and outer legs 275 to 278 and 265 to 268 of the connection profiles 231 to 234 can encompass the inner and outer legs 75 to 78 and 65 to 68 of the profiles 31 to 34, respectively. This allows for fastening the profiles 31 to 34 to the connection profiles 231 to 234, which encompass profiles 31 to 34, as shown in Fig. 7A and 7B. Correspondingly, the connection profile 230 may have a curved part which is shaped to encompass and be attached to curved profile 30. Again, the connection between connection profiles 230 to 234 and profiles 30 to 34 can be established by screws and respective holes in the profiles.

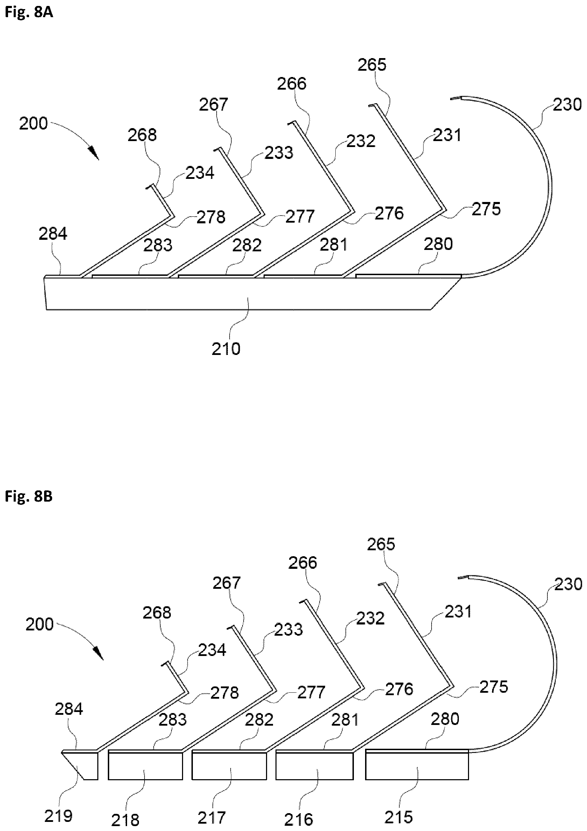

As shown in Fig. 7A, the cross-section of the connection profiles 230 to 234 can encompass the whole cross-section of the profiles 30 to 34. In addition, the connection profiles 230 to 234 can also comprise parts which encompass extensions 110 of the profiles 30 to 34, as shown in Figures 8A and 8B. However, it is also possible that the connection profiles 230 to 234 encompass only parts of the profiles 30 to 34. For example, connection profiles 231 to 234 can only encompass the inner leg or a part of the inner leg of profiles 31 to 34. Moreover, different profiles 30 to 34 can be encompassed by the respective connection profiles to different degrees. For example, it is possible that profile 30 is encompassed entirely by connection profile 230, whereas only a part of the inner leg 75 of profile 31 is encompassed by connection profile 231.

Figures 8A and 8B show cross-sections of the carrier assembly 200. In the embodiment shown in Fig. 8A, the carrier assembly 200 comprises a single carrier profile 210 to which all connection profiles 230 to 234 are attached. However, the carrier profile 210 can also be divided such that two or more groups of connection profiles have different carrier profiles. For example, like in the embodiment shown in Fig. 8B, the carrier profile 210 may be divided into several carrier profiles 215 to 219, such that each of the connection profiles 230 to 234 has an individual carrier profile 215 to 219, respectively.

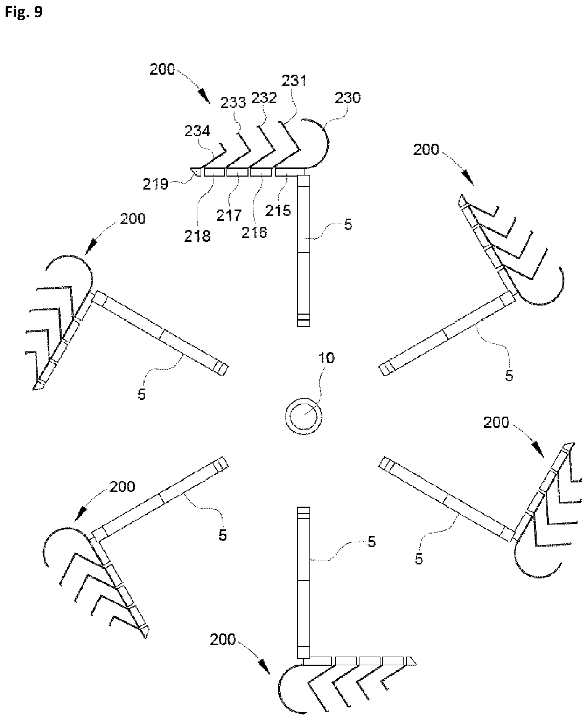

Figure 9 shows an exemplary arrangement of (e.g. six) carrier assemblies and (e.g. six) support arms relative to the axis of rotation 10 of a rotor.

By adjusting the number and the shapes of the connection profiles, the carrier assembly 200 can be used to connect a set of profiles which differs from profiles 30 to 34. For example, the carrier assembly may be used to connect three curved profiles.

The connection between the carrier profile 210 and the carrier 22 and/or a support arm 5, as well as the connection between the profiles 30 to 34 may be adjustable. For example, it may be possible to move the carrier profile 210 back and forth along its longitudinal direction, or it may be possible to move one or more individual profiles 30 to 34 back and forth relatively to the carrier profile 210 along the longitudinal direction of the carrier profile 210. Thereby, the position of the carrier profile 210 relative to the carrier 22 and/or support arm 5 can be adjusted by screwing the carrier profile 210 off, moving the carrier profile 210, and screwing the carrier profile 210 on again. Additionally or alternatively, the position of the carrier profile 210 may be adjusted via a guide rail between the carrier profile 210 and the carrier 22 and/or support arm 5, wherein the guide rail can be locked in different positions. Positions of the connection profiles relative to the carrier profile 210 may be adjusted in similar ways.

### List of reference numerals

- 1: Rotor
- 2: Direction of rotation
- 5: Support arm
- 10: Axis of rotation
- 12: Shaft
- 13: Plane
- 14: Plane
- 15: Plane
- 21: Rotor blade
- 22: Carrier
- 30: Curved profile/front profile
- 31: Angle profile
- 32: Angle profile
- 33: Angle profile
- 34: Angle profile
- 40: Convex (front) side/convex surface
- 41: Leading edge
- 42: Leading edge
- 43: Leading edge
- 44: Leading edge
- 51: Free space/channel
- 52: Free space/channel
- 53: Free space/channel
- 54: Free space/channel
- 60: Outer edge of the curved front profile 30
- 61: Outer edge of the angle profile 31
- 62: Outer edge of the angle profile 32
- 63: Outer edge of the angle profile 33
- 64: Outer edge of the angle profile 34
- 65: Outer leg of the angle profile 31
- 66: Outer leg of the angle profile 32
- 67: Outer leg of the angle profile 33
- 68: Outer leg of the angle profile 34
- 70: Inner edge of the curved front profile 30
- 71: Inner edge of the angle profile 31
- 72: Inner edge of the angle profile 32
- 73: Inner edge of the angle profile 33
- 74: Inner edge of the angle profile 34
- 75: Inner leg of the angle profile 31
- 76: Inner leg of the angle profile 32
- 77: Inner leg of the angle profile 33
- 78: Inner leg of the angle profile 34
- 100: Scaffold/support structure
- 101: Radial being tangent to the convex side 40 of the curved profile 30
- 102: Planar envelope of the inner edges
- 103: Envelope of the outer edges
- 104: Rear edge of the rotor blade
- 105: Radial being tangent to the rear edge 104
- 106: Radial
- 107: Front edge of the rotor blade
- 110: Extension
- 200: Carrier assembly
- 210: Carrier profile of the carrier assembly
- 215: Connection profile of the front profile of the carrier assembly
- 216: Connection profile of the angle profile of the carrier assembly
- 217: Connection profile of the angle profile of the carrier assembly
- 218: Connection profile of the angle profile of the carrier assembly
- 219: Connection profile of the angle profile of the carrier assembly
- 230: Curved profile/front profile of the carrier assembly
- 231: Angle profile of the carrier assembly
- 232: Angle profile of the carrier assembly
- 233: Angle profile of the carrier assembly
- 234: Angle profile of the carrier assembly
- 241: Leading edge of the angle profile of the carrier assembly
- 242: Leading edge of the angle profile of the carrier assembly
- 243: Leading edge of the angle profile of the carrier assembly
- 244: Leading edge of the angle profile of the carrier assembly
- 265: Outer leg of the angle profile of the carrier assembly
- 266: Outer leg of the angle profile of the carrier assembly
- 267: Outer leg of the angle profile of the carrier assembly
- 268: Outer leg of the angle profile of the carrier assembly
- 275: Inner leg of the angle profile of the carrier assembly
- 276: Inner leg of the angle profile of the carrier assembly
- 277: Inner leg of the angle profile of the carrier assembly
- 278: Inner leg of the angle profile of the carrier assembly
- 280: Connection leg of the curved/front profile of the carrier assembly
- 281: Connection leg of the angle profile of the carrier assembly
- 282: Connection leg of the angle profile of the carrier assembly
- 283: Connection leg of the angle profile of the carrier assembly
- 284: Connection leg of the angle profile of the carrier assembly

## Claims

1. Rotor blade (21) with an axis of rotation (10) for a vertical-axis wind turbine, the rotor blade (21) comprising:
a front end and a rear end;
at least one curved front profile (30), which has a convex side (40) with an apex that points towards the front end and a concave side (50) which points towards the rear end;
at least one rear profile (31, 32, 33, 34) which is arranged rearward and at a distance of the front profile (30);
wherein each profile (30, 31, 32, 33, 34) comprises an outer edge (60, 61, 62, 63, 64) and an inner edge (70, 71, 72, 73, 74),
**characterized in that**
at least one of the profiles (30, 31, 32, 33, 34) has a first extension (110),
wherein the first extension (110) is arranged in the vicinity of the outer edge (60, 61, 62, 63, 64) of the profile (30, 31, 32, 33, 34), and/or a second extension (110), wherein the second extension is arranged in the vicinity of the inner edge (70, 71, 72, 73, 74) of the profile (30, 31, 32, 33, 34),
wherein the first and/or second extension (110) extend from the respective edge, in the vicinity of which it is arranged, towards the rear end with a maximum deviation of ±45°.

2. Rotor blade (21) according to claim 1,
**characterized in that**
at least two outer edges (60, 61, 62, 63, 64) have a common cylindrical envelope (103), which has a cylinder axis (10), which coincides with the axis of rotation (3).

3. Rotor blade (21) according to claim 2,
**characterized in that**
at least all outer edges (61, 62, 63, 64) of the rear profiles (31, 32, 33, 34) have the common cylindrical envelope (103).

4. Rotor blade (21) according to any of the preceding claims,
wherein the rotor blade (21) comprises at least two rear profiles (31, 32, 33, 34),
**characterized in that**
at least three inner edges (70, 71, 72, 73, 74) lie in a common plane (102).

5. Rotor blade (21) according to claim 4,
**characterized in that**
at least all inner edges (71, 72, 73, 74) of the rear profiles (31, 32, 33, 34) lie in the common plane (102).

6. Rotor blade (21) according to claims 3 and 5, **characterized in that**
the common cylindrical envelope (103) and the common plane (102) have two intersection edges, the rearmost of which is referred to as rear edge of the rotor blade (104);
the common cylindrical envelope (103) and the radial (101), which is tangent to the convex side (40) of the front profile (30), have one intersection edge, this intersection edge being referred to as front edge of the rotor blade (107),
the length of the section of the envelope (103) from the rear edge of the rotor blade (104) to the front edge of the rotor blade (107) corresponds to at least approximately 1/6 of the circumference of the envelope (103) with a maximum deviation of ±20%.

7. Rotor blade (21) according to any of the preceding claims, **characterized in that**
at least one of the rear profiles (31, 32, 33, 34) is an angle profile (31, 32, 33, 34);
wherein each angle profile (31, 32, 33, 34) comprises one inner leg (75, 76, 77, 78) and one outer leg (65, 66, 67, 68), which constitute one leading edge (41, 42, 43, 44) that points towards the front end.

8. Rotor blade (21) according to claim 7,
wherein the rotor blade (21) comprises at least one first (31) and one second angle profile (32),
**characterized in that**
the inner leg (75) of the first angle profile (31) and the inner leg (76) of the second angle profile (32) are parallel to each other, and/or
the outer leg (65) of the first angle profile (31) and the outer leg (66) of the second angle profile (32) are parallel to each other.

9. Rotor blade (21) according to claim 7 or 8,
wherein the rotor blade (21) comprises at least one first (31) and one second angle profile (32),
**characterized in that**
the leading edge (41) of the first angle profile (31) and the leading edge (42) of the second angle profile (32) lie in a common plane (14).

10. Rotor blade (21) according to any of claims 8 and 9,
wherein the rotor blade (21) comprises at least one third (33) and one fourth angle profile (34),
**characterized in that**
the inner leg (77) of the third angle profile (33) and the inner leg (78) of the fourth angle profile (34) are parallel to each other, and/or
the outer leg (67) of the third angle profile (33) and the outer leg (68) of the fourth angle profile (34) are parallel to each other.

11. Rotor blade (21) according to any of claims 8 to 10,
wherein the rotor blade (21) comprises at least one third (33) and one fourth angle profile (34),
**characterized in that**
the leading edge (43) of the third angle profile (33) and the leading edge (44) of the fourth angle profile (34) lie in a further, common plane (15).

12. Rotor blade (21) according to claims 9 and 11,
**characterized in that**
the plane (14) and the further plane (15) are parallel to each other.

13. Rotor blade (21) according to any of the preceding claims, **characterized in that**
at least one of the rear profiles is a curved profile;
wherein each curved profile comprises an area which has a convex side that points towards the front end.

14. Rotor (1), **characterized by** at least one rotor blade (21) according to any one of the preceding claims.

15. Rotor (1) according to claim 14, further comprising:
at least one carrier (22) and/or at least one support arm (5);
at least one carrier assembly (200) having at least one carrier profile (210) and at least one connection profile (230, 231, 232, 233, 234),
wherein the at least one carrier profile (210) configured to be fastened to the at least one carrier (22) and/or the at least one support arm (5),
wherein the at least one connection profile (230, 231, 232, 233, 234) are configured to be fastened to the profiles (30, 31, 32, 33, 34) of the rotor blade (21),
wherein the at least one carrier profile (210) and the at least one connection profile (230, 231, 232, 233, 234) are configured to be connected to each other.

16. Wind turbine **characterized by** at least one rotor (1) according to one of claims 14 and 15.
